Europäisches Patentamt

European Patent Office

Office européen des brevets

(19)

(11) EP 0 660 920 B1

(12) **EUROPÄISCHE PATENTSCHRIFT**

(45) Veröffentlichungstag und Bekanntmachung des Hinweises auf die Patenterteilung:
**02.06.1999 Patentblatt 1999/22**

(21) Anmeldenummer: **94924762.1**

(22) Anmeldetag: **15.07.1994**

(51) Int Cl.⁶: **G01F 1/84**

(86) Internationale Anmeldenummer:
**PCT/EP94/02319**

(87) Internationale Veröffentlichungsnummer:
**WO 95/03528 (02.02.1995 Gazette 1995/06)**

(54) **CORIOLIS-MASSEDURCHFLUSSAUFNEHMER**

CORIOLIS MASS FLOW RATE SENSOR

CAPTEUR DE DEBIT MASSIQUE A EFFET DE CORIOLIS

(84) Benannte Vertragsstaaten:
**CH DE DK ES FR GB IT LI NL**

(30) Priorität: **21.07.1993 EP 93810523**

(43) Veröffentlichungstag der Anmeldung:
**05.07.1995 Patentblatt 1995/27**

(73) Patentinhaber: **Endress + Hauser Flowtec AG
CH-4153 Reinach BL 1 (CH)**

(72) Erfinder: **DRAHM, Wolfgang
CH-4222 Zwingen (CH)**

(74) Vertreter: **Morstadt, Volker, Dipl.-Ing.
Endress + Hauser
Zentrale Patentabteilung
Postfach 2222
79574 Weil am Rhein (DE)**

(56) Entgegenhaltungen:
**EP-A- 0 473 919          EP-A- 0 598 287
DE-A- 4 143 361          DE-U- 8 712 331
DE-U- 8 717 205**

**Beschreibung**

Die Erfindung betrifft Massedurchflußaufnehmer nach dem Coriolis-Prinzip mit einem geraden Meßrohr als von einem zu messenden Fluid durchströmtem Schwingkörper.

In der eigenen US-A 47 93 191 ist ein Massedurchflußaufnehmer beschrieben, der in den Verlauf einer von einem zu messenden Fluid durchströmten Rohrleitung eines gegebenen Durchmessers axial mit ihr fluchtend über Flansche einsetzbar ist,

- mit einem Einlaßrohr und einem Auslaßrohr,

  -- die der Verbindung mit der Rohrleitung dienen,

- mit einem Einlaßverteilerstück und einem Auslaßverteilerstück,
- mit jeweils einer ringförmigen Membran,

  -- über die das Einlaßrohr mit dem Einlaßverteilerstück bzw. das Auslaßrohr mit dem Auslaßverteilerstück verbunden ist,

- mit zwei parallelen, geraden, an jeweils beiden Enden im Einlaßverteilerstück bzw. im Auslaßverteilerstück fixierten Meßrohren gleicher lichter Weite und gleicher Wandstärke,
- mit einem äußeren Trägerrohr, dessen jeweiliges Ende am jeweiligen Flansch fixiert ist, und
- mit Mitteln, die die Meßrohre zu entgegengesetzt zueinander erfolgenden Resonanzschwingungen anregen.

In der eigenen US-A 49 49 583 ist ferner ein Massedurchflußaufnehmer mit einem einzigen geraden Meßrohr beschrieben, das zu peristaltischen Schwingungen seiner Querschnittsfläche angeregt wird.

In der Praxis haben sich Massedurchflußaufnehmer nach dem eingangs erwähnten Prinzip mit zwei saitenartig schwingenden, geraden Meßrohren bewährt. Allerdings können bei ihnen aus unterschiedlichen Gründen, z.B. wegen der Empfindlichkeit des Massedurchflußaufnehmers gegenüber aus der Rohrleitung stammenden Vibrationen oder wegen der Abhängigkeit des Meßergebnisses vom Druck des Fluids, die Membranen nicht beliebig weich ausgebildet werden, sondern müssen eine gegebene Mindeststeifheit haben. Somit können aber die erwähnten Einflüsse nicht vollständig unterdrückt werden.

Da ferner Temperaturänderungen des Fluids inhomogene Temperaturverteilungen im Massedurchflußaufnehmer zur Folge haben, führen diese zu temperaturbedingten mechanischen Spannungen in den schwingenden, geraden Meßrohren und in den Membranen. Erreichen diese Spannungen Werte oberhalb der Dehngrenze der Membranen, so entstehen irreversible plastische Verformungen, die die Kenngrößen des Schwingsystems ebenfalls irreversibel ändern, so daß eine neue Kalibrierung des Massedurchflußaufnehmers erforderlich wird.

Wie weiterer Stand der Technik zeigt, arbeitet die Fachwelt schon länger an der Lösung dieses Problemkreises. So ist in der EP-A 473 919 ein Massedurchflußaufnehmer nach dem Coriolis-Prinzip als Teil einer Dosiereinrichtung beschrieben,

- der in den Verlauf einer von einem zu messenden Fluid durchströmten Rohrleitung eines gegebenen Durchmessers über Flansche einsetzbar ist,
- mit einem gebogenen, vom Fluid durchflossenen, zwischen den Flanschen verlaufenden Meßrohr,
- mit einem zum Meßrohr parallelen, gebogenen, nicht-durchflossenen Blindrohr,

  -- wobei Meßrohr und Blindrohr in einem inneren Tragerahmen eingespannt sind,

- mit einem äußeren Tragerahmen, und
- mit Mitteln, die nur am Meßrohr zur Erregung von Resonanz-Schwingungen des Meßrohrs angreifen.

Bei diesem vorbeschriebenen Massedurchflußaufnehmer dient das Blindrohr als Antiresonator, so daß sich ein abgestimmtes, aus Meßrohr, Antiresonator und innerem Tragrahmen bestehendes inneres Schwingungssystem ergibt. Seine Abmessungen werden durch die Finite-Elemente-Methode vorausberechnet. Da die Resonanzeigenschaften des Schwingungssystems aber in erster Linie von der Art des Fluids und beim selben Fluid auch von dessen Dichte und dessen Momentan-Temperatur abhängen, ist somit klar, daß für jedes Fluid eine eigene Berechnung durchzuführen ist, die für die konkrete Dimensionierung jeweils ein unterschiedliches Ergebnis hat und somit andere Abmessungen liefert. Für Universal-Massedurchflußaufnehmer, die die verschiedensten Fluide mit ein und demselben Aufnehmer messen sollen, ist der Vorschlag der EP-A 473 919 daher praktisch ungeeignet.

Schließlich ist in der DE-A 41 43 361 ein Massedurchflußaufnehmer nach dem Coriolis-Prinzip beschrieben,

- der in den Verlauf einer von einem zu messenden Fluid durchströmten Rohrleitung eines gegebenen Durchmessers axial mit ihr fluchtend über Flansche einsetzbar ist,
- mit einem einzigen geraden oder einem einzigen im wesentlichen geraden, vom Fluid durchflossenen, zwischen den Flanschen verlaufenden Meßrohr,
- mit einem Trägerrohr, dessen jeweiliges Ende am jeweiligen Flansch fixiert ist,
- mit einem Kompensationszylinder, in dem das Meßrohr innerhalb des Trägerrohrs fixiert ist und der das Trägerrohr nicht berührt,
- mit zwischen Meßrohr und Kompensationszylinder angeordneten Mitteln zur Erregung von Resonanz-Schwingungen des Meßrohrs, und

- mit am Meßrohr angeordneten Massekörpern zur Beeinflussung von deren Eigenresonanzfrequenz.

In den Kompensationszylinder ist bei diesem vorbeschriebenen Massedurchflußaufnehmer das Meßrohr so eingebaut, daß es bei Normaltemperatur des Fluids unter einer Zugspannung steht, die bei steigender Temperatur aufgrund der unterschiedlichen Ausdehnungskoeffizienten von Kompensationszylinder bzw. Meßrohr abnimmt und bei noch weiter steigender Temperatur in eine Druckspannung übergeht. Die obere Temperaturgrenze ist daher gegenüber einem Meßrohr ohne Zugvorspannung erhöht.

Ausgehend von der eingangs zuerst referierten USA 47 93 191 ist es eine Aufgabe der Erfindung, einen Massedurchflußaufnehmer zu schaffen, der zwar mit zwei geraden Rohren ausgestattet ist, bei dem jedoch auf die Verteilerstücke und somit auch auf die Membranen verzichtet werden kann und bei dem am Meßrohr keine Ausgleichs-Massekörper erforderlich sind. Trotzdem sollen vom Meßrohr auf das Trägerrohr möglichst keine Schwingungen übertragen werden. Es soll also eine Eigenschaft des Massedurchflußaufnehmer der US-A 47 93 191, die dort auf der Verwendung der Membranen beruht, beibehalten, also auf andere Art und Weise, erreicht werden.

Daher besteht die Erfindung in einem Massedurchflußaufnehmer nach dem Coriolis-Prinzip,

- der in den Verlauf einer von einem zu messenden Fluid durchströmten Rohrleitung eines gegebenen Durchmessers axial mit ihr fluchtend über Flansche einsetzbar ist,
- mit einem geraden, vom Fluid durchflossenen, zwischen den Flanschen verlaufenden Meßrohr,
- mit einem zum Meßrohr parallelen, geraden, nichtdurchflossenen Blindrohr,
- mit einer einlaßseitigen und einer auslaßseitigen Knotenplatte,

  -- deren eine den einlaßseitigen Endteil des Meßrohrs am entsprechenden Endteil des Blindrohrs und
  -- deren andere den auslaßseitigen Endteil des Meßrohrs am entsprechenden Endteil des Blindrohrs jeweils nebeneinander fixiert,

- mit einem Trägerrohr, dessen jeweiliges Ende am jeweiligen Flansch fixiert ist, und
- mit Mitteln, die nur am Blindrohr zur Erregung von Resonanz-Schwingungen des Meßrohrs angreifen.

Nach einer bevorzugten Ausgestaltung der Erfindung umgibt das Blindrohr koaxial das Meßrohr. Dabei kann das Blindrohr nach einer anderen bzw. nach einer weiteren Ausgestaltung der Erfindung in die jeweilige Knotenplatte einseitig eingesetzt und dadurch verschlossen, vorzugsweise evakuiert, sein.

Nach einer anderen Ausgestaltung der Erfindung kann die Resonanzfrequenz des Blindrohrs in Abhängigkeit von der Phasenlage seiner Schwingung zu der des Meßrohrs auf möglichst 180° geregelt werden.

Nach einer weiteren Ausgestaltung der Erfindung umfassen die Mittel zur Erregung von Resonanz-Schwingungen ein elektromagnetisches System und eine Treiberschaltung,

- wobei das elektromagnetische System

  -- eine das Blindrohr umgebende Hülse aus einem weichmagnetischen Material,
  -- einen ersten Elektromagneten mit einem ersten U-förmigen Kern und eine erste Spule,
  -- einen zweiten Elektromagneten mit einem zweiten U-förmigen Kern und einer zweiten Spule enthält,

    --- welche Elektromagneten bezüglich der Hülse einander diametral gegenüberliegen, und

- wobei die Treiberschaltung einen einem Gleichstrom überlagerten Wechselstrom dadurch erzeugt,

  -- daß ein für die Schwingungen des Meßrohrs charakteristisches Signal dem ersten Eingang eines Phasenvergleichers zugeführt ist,
  -- daß ein aus einem für die Schwingungen des Blindrohrs charakteristischen Signal mittels eines einstellbaren Phasenschiebers erzeugtes Signal dem zweiten Eingang des Phasenvergleichers zugeführt ist und
  -- daß das Ausgangssignal des Phasenvergleichers integriert wird,

    --- wobei der einstellbare Phasenschieber solange verstellt wird, bis am Trägerrohr nur noch minimale Vibrationen festzustellen sind, und

  -- welcher Wechselstrom mittels einer Phasenregelschleife auf die Resonanzfrequenz des Meßrohrs eingeregelt ist.

Nach einer weiteren Ausgestaltung der Erfindung umfassen die Mittel zur Erregung von Resonanz-Schwingungen ein elektromagnetisches System und eine Treiberschaltung,

- wobei das elektromagnetische System

  -- eine das Blindrohr umgebende Hülse aus einem weichmagnetischen Material,

-- einen ersten Elektromagneten mit einem ersten U-förmigen Kern und eine erste Spule,

-- einen zweiten Elektromagneten mit einem zweiten U-förmigen Kern und einer zweiten Spule enthält,

--- welche Elektromagneten bezüglich der Hülse einander diametral gegenüberliegen, und

- wobei die Treiberschaltung positive Halbwellen eines Treibersignals dem ersten Elektromagneten und negative Halbwellen dieses Signals dem zweiten Elektromagneten zuführt,

-- welches Treibersignal das Ausgangssignal eines Phasenschiebers ist,

--- dessen Signaleingang ein für die Schwingungen des Meßrohrs charakteristisches Signal und

--- dessen Steuereingang das integrierte Ausgangssignal eines Phasenvergleichers zugeführt ist,

---- dessen einem Eingang das für die Schwingungen des Meßrohrs charakteristische Signal und

---- dessen anderem Eingang ein für die Schwingungen des Blindrohrs charakteristisches Signal über einen einstellbaren Phasenschieber zugeführt ist,

--- wobei der Phasenschieber solange verstellt wird, bis am Trägerrohr nur noch minimale Vibrationen festzustellen sind.

Nach einer weiteren Ausgestaltung der Erfindung umfassen die Mittel zur Erregung von Resonanz-Schwingungen ein elektromagnetisches System und eine Treiberschaltung,

- wobei das elektromagnetische System

-- eine das Blindrohr umgebende Hülse aus einem weichmagnetischen Material,

-- einen ersten Elektromagneten mit einem ersten U-förmigen Kern und eine erste Spule,

-- einen zweiten Elektromagneten mit einem zweiten U-förmigen Kern und einer zweiten Spule enthält,

--- welche Elektromagneten bezüglich der Hülse einander diametral gegenüberliegen, und

- wobei die Treiberschaltung positive Halbwellen eines Treibersignal dem ersten Elektromagneten und negative Halbwellen dieses Signals dem zweiten Elektromagneten zuführt,

-- welches Treibersignal das Ausgangssignal eines spannungsgesteuerten Oszillators ist,

--- dessen Steuereingang das integrierte Ausgangssignal eines Phasenvergleichers ist,

---- dessen einem Eingang das für die Schwingungen des Meßrohrs charakteristische Signal und

---- dessen anderem Eingang ein für die Schwingungen des Blindrohrs charakteristisches Signal über einen einstellbaren Phasenschieber zugeführt ist,

--- wobei der Phasenschieber solange verstellt wird, bis am Trägerrohr nur noch minimale Vibrationen festzustellen sind.

Bei diesen drei schaltungstechnischen Ausgestaltungen der Erfindung kann der einstellbare Phasenschieber durch einen Sensor für die Beschleunigung des Trägerrohrs und der Phasenvergleicher durch einen Multiplizierer ersetzt sein.

Schließlich kann nach einer letzten Ausgestaltung der Erfindung aus den Schwingungsamplituden von Meßrohr und Blindrohr die Viskosität des Fluids ermittelt werden.

Die Erfindung wird nun anhand der Figuren der Zeichnung näher erläutert, in der als Ausführungsbeispiele schematisch der mechanische Teil und verschiedene Treiberschaltungen dargestellt sind.

Fig. 1 zeigt          einen vertikalen Längsschnitt des mechanischen Teils eines Massedurchflußaufnehmers nach der Erfindung,

Fig. 2 zeigt          einen vertikalen Längsschnitt des mechanischen Teils eines Massedurchflußaufnehmers nach einer Ausgestaltung der Erfindung,

Fig. 3 zeigt          schematisch ein elektromagnetisches System zur Erregung des Blindrohrs,

Fig. 4 zeigt          ein Blockschaltbild eines Teils einer ersten Treiberschaltung für das elektromagnetische System nach Fig. 3,

Fig. 5 zeigt          ein Blockschaltbild eines Teils einer zweiten Treiberschaltung für das elektromagnetische System nach Fig. 3,

Fig. 6 zeigt          ein Blockschaltbild eines Teils einer dritten Treiberschaltung für das elektromagnetische System nach Fig. 3,

Fig. 7 zeigt    ein Blockschaltbild eines Teils einer Weiterbildung der Treiberschaltungen für das elektromagnetische System nach Fig. 3, und

Fig. 8 zeigt    ein Blockschaltbild einer Schaltung zur Messung der Viskosität des Fluids.

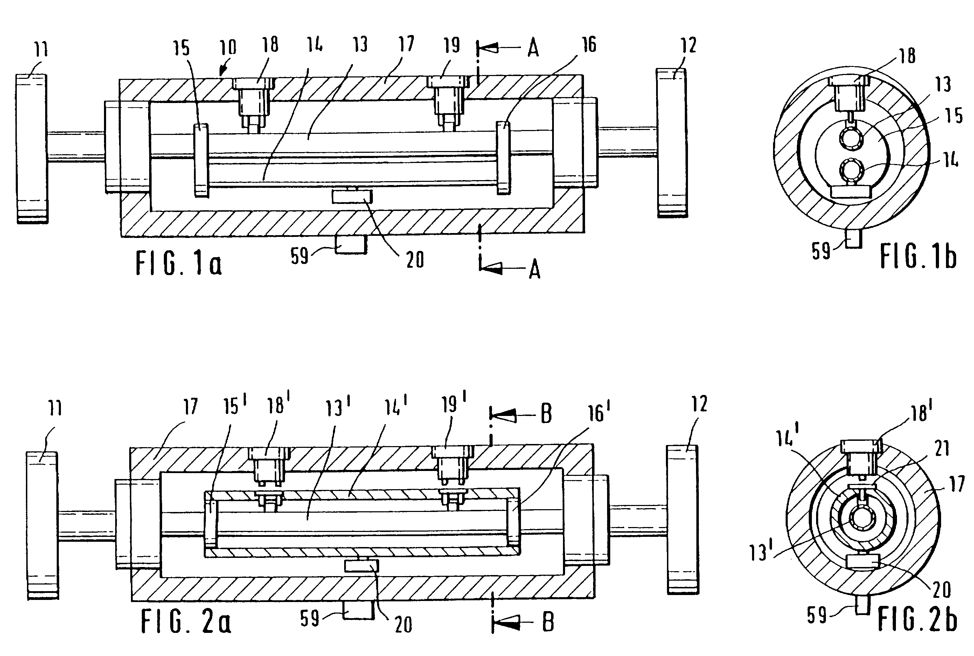

Der in Fig. 1a in geschnittener Längsansicht und in Fig. 1b im Querschnitt entlang der Linie A-A von Fig. 1a gezeigte mechanische Teil eines Massedurchflußaufnehmers 10, der in den Verlauf einer von einem zu messenden Fluid durchströmten, aus Übersichtlichkeitsgründen jedoch nicht dargestellten Rohrleitung eines gegebenen Durchmessers über Flansche 11, 12 einsetzbar ist, hat ein gerades Meßrohr 13, das an je einem Ende im jeweiligen Flansch 11, 12 fixiert ist.

Ferner ist ein zum Meßrohr paralleles, gerades, nicht-durchflossenen Blindrohr 14 vorgesehen, das z.B. verschlossen und gegebenenfalls evakuiert sein kann. Anstelle eines Blindrohrs kann auch eine massiver Stab beliebigen Querschnitts, vorzugsweise jedoch ein, insb. kreis-, zylindrischer Stab, vorgesehen werden.

Das Blindrohr 14 ist mit dem Meßrohr 13 über eine einlaßseitige bzw. eine auslaßseitige Knotenplatte 15, 16 derart verbunden, daß die Knotenplatte 15 den einlaßseitigen Endteil des Meßrohrs 13 am entsprechenden Endteil des Blindrohrs 14 und die Knotenplatte 16 den auslaßseitigen Endteil des Meßrohrs 13 am entsprechenden Endteil des Blindrohrs 14 jeweils nebeneinander fixiert.

In Fig. 1 ist für diese Fixierung eine bevorzugte Variante gezeigt, nämlich daß die beiden Enden des Blindrohrs 14 in der jeweiligen Knotenplatte 15, 16 stumpf enden und dort dicht, insb. vakuum-dicht, eingepaßt, z.B. eingelötet oder eingeschweißt, sind.

Die Flansche 11, 12 sind in einem Trägerrohr 17 befestigt, in dem zwei Sensoren 18, 19 angeordnet sind, mit denen die mechanischen Schwingungen des Meßrohrs 13 in elektrische Meßsignale umgewandelt werden. Diese Sensoren können z.B. optoelektronische Sensoren sein, wie sie in der genannten US-A 48 01 897 beschrieben sind, oder es können elektromagnetische Sensoren vorgesehen werden, wie sie z.B. in der EP-A 83 144 erläutert sind.

Im Betriebszustand wird lediglich das Blindrohr 13 durch entsprechende Mittel zu Resonanzschwingungen angeregt, die über die Knotenplatten 15, 16 auf das Meßrohr 13 übertragen werden, so daß dieses ebenfalls zu Resonanzschwingungen angeregt wird, die entgegengesetzt zu denen des Blindrohrs sind; einander zugewandte Teile von Meßrohr und Blindrohr schwingen also aufeinander zu oder von einander weg.

Diese Mittel zur Erregung der Resonanzschwingungen des Blindrohrs umfassen eine elektromagnetische Treiber-Anordnung 20, die in der Mitte zwischen den Flanschen am Blindrohr 14 befestigt ist. Die Treiber-Elektronik kann z.B. von der in der US-A 48 01 897 beschriebenen Art sein, die eine Phasenregelschleife zur automatischen Einstellung auf die Resonanzfrequenz von schwingenden Rohren enthält.

Im Betriebszustand wird eine Phasendifferenz der Schwingungen des einlaßseitigen Teils des Meßrohrs 13 gegenüber denen von dessen auslaßseitigen Teil mittels der Sensoren 18, 19 und einer zugehörigen Auswerte-Elektronik gemessen, die aus der Phasendifferenz den Massendurchfluß und/oder aus der Schwingfrequenz des Meßrohrs 13 die Dichte des Fluids ermittelt. Eine Auswerteelektronik für die erwähnten opto-elektronischen Sensoren ist z.B. in der Zeitschrift "Automatisierungstechnische Praxis atp", 1988, Nr. 5, Seiten 224 bis 230 beschrieben.

Der in Fig. 2a in geschnittener Längsansicht und in Fig. 2b im Querschnitt entlang der Linie B-B von Fig. 2a gezeigte mechanische Teil einer anderen Ausführungsform der Erfindung unterscheidet sich von der der Fig. 1 dadurch, daß Meßrohr 13' und Blindrohr 14' nicht wie in Fig. 1 nebeneinander angeordnet, sondern daß sie koaxial zueinander sind, und zwar mit dem Meßrohr 13' innen und dem Blindrohr 14' außen.

Auch hier bilden die Knotenplatten 15', 16' wieder bevorzugt den Abschluß des Blindrohrs 14' und eine dichte Verbindung mit ihm. Als Sensoren 18', 19' eignen sich hier besonders gut die erwähnten optischen Sensoren, da die Durchleitung eines Lichtsignals durch die Wand des Blindrohrs 14' sehr einfach mittels eines in diese Wand eingesetzten, z.B. eingeschmolzenen Sichtfensters aus einem glasartigen Material ermöglicht werden kann.

Die übrigen Teile der Anordnung nach Fig. 2 sind gleichartig wie die entsprechenden Teile der Fig. 1, so daß auf deren obige Beschreibung verwiesen werden kann.

Die Knotenplatten 15, 15', 16, 16' können, außer daß sie wie beschrieben an Meßrohr und Blindrohr fixiert sind, auch noch am Trägerrohr 17, 17' befestigt sein.

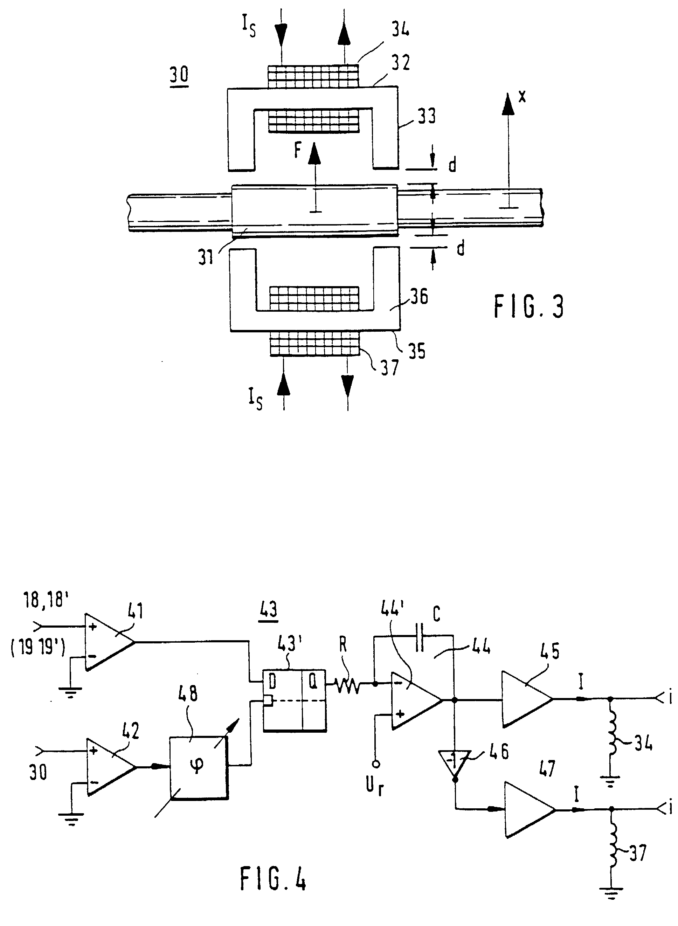

Am jeweiligen Trägerrohr 17 nach den Fig. la und 2a kann, bevorzugt in seiner Mitte, noch ein Sensor 59 für seine Beschleunigung angebracht sein, der in Zusammenhang mit den in den Fig. 4 bis 7 unten erläuterten Treiberschaltungen von Interesse ist.

In Fig. 3 ist schematisch ein elektromagnetisches System 30 zur Erregung des Blindrohrs 14 bzw. 14' gezeigt. Das elektromagnetische System 30 enthält eine das Blindrohr umgebende Hülse 31 aus weichmagnetischem Material, z.B. Weicheisen. Ferner ist ein erster Elektromagnet 32 mit einem ersten U-förmigen Kern 33 und einer ersten Spule 34 sowie ein zweiter Elektromagnet 35 mit einem zweiten U-förmigen Kern 36 und einer zweiten Spule 37 vorgesehen. Die beiden Elektromagnete 32, 35 liegen bezüglich der Hülse 31 und somit auch des Blindrohrs 14, 14' einander diametral gegenüber.

Die in Fig. 3 eingezeichnete Kraft F(x) in X-Richtung ist dabei vom Spulenstrom $I_S$, der durch die Spulen 36, 37 fließt, und vom Luftspalt d entsprechend der folgenden Gleichung abhängig:

$$F(x) = 0{,}5\mu_0 I_S^2 w^2 A[1/(d-x)^2 - 1/(d+x)^2].$$

Hierin bedeuten:

$\mu_0$    die Permeabilitätskonstante (= $1{,}256*10^{-8}$ Vs/Acm),

w    die Windungszahl einer Spule,

A    der vom Magnetfeld der Spule durchflutete Querschnitt, also im wesentlichen die Stirnflächen der beiden Schenkel des "U".

Die beiden Spulen 34, 37 werden von einer Treiberschaltung abwechselnd mit der Halbwelle eines Wechselstroms i, vorzugsweise eines Sinusstroms, gespeist. Die erforderliche 90°-Phasenvoreilung zwischen diesem Wechselstrom i und der Rohrschwingung wird innerhalb der Treiberschaltung erzeugt.

Um sicherzustellen, daß Meßrohr 13, 13' und Blindrohr 14, 14' entgegengesetzt zu einander, also praktisch in Gegenphase, schwingen und auf das Trägerrohr 17 keine Schwingungen übertragen werden, wird dem Wechselstrom i ein Gleichstrom I überlagert. Für den Spulenstrom $I_S$ gilt also:

$$I_S = i + I.$$

Durch die Überlagerung des geregelten Gleichstroms I kann die Resonanzfrequenz des Blindrohrs 14, 14' verändert werden, da der Gleichstrom I bewirkt, daß sich das elektromagnetische System 30 wie eine in ihrer Federkraft einstellbare elektrische Feder verhält.

Um weitere Berechnungen zu vereinfachen, kann die obige Gleichung für F(x) wie folgt durch eine lineare Gleichung ersetzt werden, ohne daß ein nichttolerierbarer Fehler entsteht:

$$F'(x) = 0{,}5\mu_0 I_S^2 w^2 Akx,$$

wobei k eine aus der konkreten Bemessung sich ergebende Konstante mit der Dimension Länge$^{-3}$ ist.

Betrachtet man die vom Gleichstrom I hervorgerufene Kraftwirkung, so stellt man fest, daß die Richtung der Kraft mit der der Auslenkung x zusammenfällt, wobei der Betrag der Kraft proportional zum Gleichstrom I ist. Im Gegensatz dazu üben mechanische Federn eine Kraft aus, die ihrer Auslenkung entgegenwirkt. Die Federkonstante $c_e$ der hier betrachteten elektrischen Feder ist daher negativ.

Zur Bestimmung der erforderlichen Federkonstante $c_e$ berücksichtigt man, daß die elektrische Feder dem durch das schwingende Blindrohr vorgegebenen mechanischen Federsystem mit seiner Federkonstanten $c_m$ parallelgeschaltet ist.

Soll nun also durch die elektrische Feder, also den Gleichstrom I, die Resonanzfrequenz $f_{res}$ des Blindrohrs, das eine Masse m hat, um eine Differenzfrequenz $\delta f$ verändert werden, so gilt:

$$c_e = -[c_m - 4m\pi^2(f_{res} - \delta f)^2]$$

Zur Steigerung der Leistungsfähigkeit und zur Verbesserung der Linearität des elektromagnetischen Systems 30 kann der jeweilige Kern 33, 36 mindestens teilweise als ein Dauermagnet ausgebildet sein, der einen konstanten magnetischen Fluß erzeugt, so daß für die jeweilige Spule 34, 37 in Abhängigkeit vom Strom $I_S$ und dessen Richtung der magnetische Fluß vergrößert oder verringert werden kann.

Eine Schaltung zur Erzeugung des Gleichstroms I ist als Blockschaltbild in Fig. 4 dargestellt. Diese wird hier als Teil der bereits erwähnten Treiberschaltung, die den Wechselstrom i erzeugt, betrachtet.

Nach Fig. 4 gelangt das Signal eines der Sensoren 18 oder 18' bzw. 19 oder 19', also ein für die Schwingungen des Meßrohrs 13, 13' repräsentatives Signal, an den nichtinvertierenden Eingang eines Differenzverstärkers 41. Ferner gelangt eine an einer der Spulen 34, 37 des elektromagnetischen Systems 30 abgegriffene Spannung, also ein für die Schwingungen des Blindrohrs 14, 14' repräsentatives Signal, an den nichtinvertierenden Eingang eines Differenzverstärkers 42.

Der jeweilige invertierende Eingang der beiden Differenzverstärker 41, 42 ist mit dem Schaltungsnullpunkt verbunden. Die Differenzverstärker 41, 42, die vorzugsweise Operationsverstärker sind, werden durch die Eingangssignale übersteuert, so daß sie am jeweiligen Ausgang rechteckförmige Signale abgeben.

Der Ausgang des Differenzverstärkers 41 ist mit dem D-Eingang eines D-Flipflops 43' verbunden, das einen Phasenvergleicher 43 realisiert. Der Ausgang des Differenzverstärkers 42 liegt am Eingang eines einstellbaren Phasenschiebers 48, dessen Ausgangssignal dem Takteingang des D-Flipflops 43' zugeführt ist.

Der Q-Ausgang des D-Flipflops 43' ist mit dem Eingang eines Integrators 44 über einen hochohmigen Widerstand R verbunden. Der Integrator 44 besteht aus einem Differenzverstärker 44' mit im Rückkopplungsweg von dessen Ausgang zu dessen nicht-invertierendem Eingang angeordnetem Kondensator C, welcher Eingang auch der des Integrators 44 ist, während am invertierenden Eingang eine Referenz-Gleichspannung $U_r$ liegt.

Der Ausgang des Integrators 44 liegt am Eingang einer ersten Leistungsstufe 45 und über einen Analog-Inverter 46, also z.B. einen Spannungsverstärker mit der Verstärkung -1, am Eingang einer zweiten Leistungsstufe 47. Die beiden Leistungsstufen 45, 47 sind zugleich Spannungs/ Stromwandler, so daß ihr jeweiliger Ausgang, an dem die Spule 34 bzw. 37 angeschlossen ist, den oben erwähnten und definierten Gleichstrom I zusätzlich zum Wechselstrom i in die jeweilige Spule fließen läßt.

Anstatt das für die Schwingungen des Blindrohrs 14, 14' repräsentative Signal am elektromagnetischen System 30 abzugreifen, kann hierfür am Blindrohr 14, 14' ein Schwingungssensor angebracht sein, der in den Figuren jedoch nicht dargestellt ist.

Der einstellbare Phasenschieber 48 wird, z.B. bei der werksseitigen Kalibrierung des Massedurchflußaufnehmers solange verstellt, bis am Trägerrohr 17 praktisch keine Vibrationen mehr festzustellen sind, diese also auf ein Minimum zurückgegangen sind.

Wegen dieser Einstellung auf das Schwingungsminimum des Trägerrohrs schwingen Meßrohr 13, 13' und Blindrohr 14, 14' auch mit der am einstellbaren Phasenschieber 48 eingestellten Phasendifferenz φ. Diese ist auf baulich bedingte prinzipielle Parameter zurückzuführen und stellt eine Gerätekonstante dar.

Aufgrund der Verknüpfung des Sensorsignals mittels des D-Flipflops 43', das, wie erwähnt, als Phasenvergleicher wirkt, stellt sich genau eine, und zwar die gewünschte (180° - φ)-Phasenlage zwischen Blindrohr 14, 14' und Meßrohr 13, 13' ein, was leicht einzusehen ist. Die Dauer der Impulse am Ausgang des D-Flipflops 43' bestimmt nämlich den Zahlenwert des Gleichstroms I.

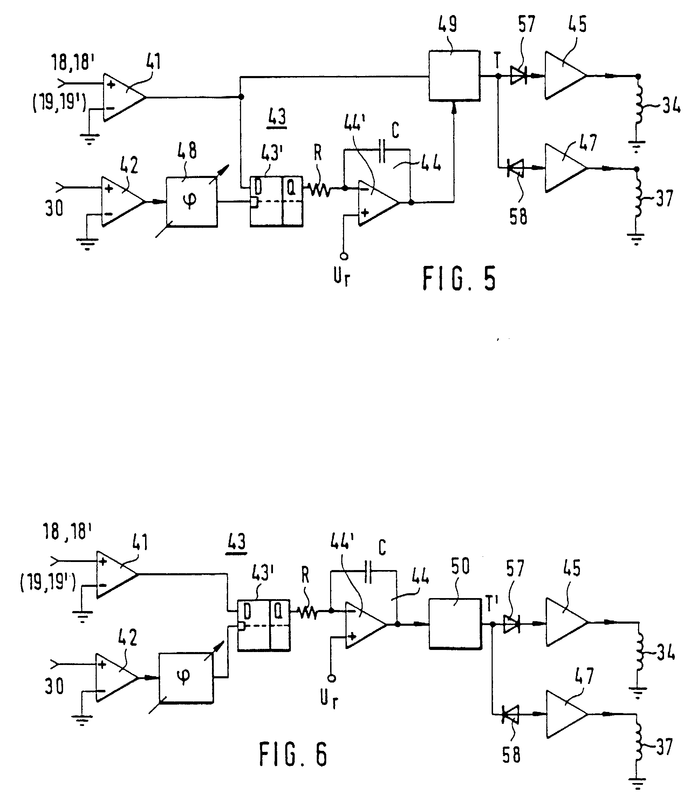

Eine andere Schaltung zur Ansteuerung der Spulen 34, 37 ist als Blockschaltbild in Fig. 5 dargestellt. Die in Fig 5. mit Fig. 4 übereinstimmenden Teile haben dieselben Bezugszeichen und werden nicht nochmals erläutert.

Anstatt des mit dem Wechselstrom i überlagerten Gleichstroms I nach Fig. 4 werden hier positive und negative Halbwellen eines Treibersignals T ausgenutzt; die positiven Halbwellen sind dem ersten Elektromagneten 32 und die negativen Halbwellen dem zweiten Elektromagneten 35 zugeführt.

Das Treibersignal T ist das Ausgangssignal eines Phasenschiebers 49, dessen Signaleingang mit dem Ausgang des Differenzverstärkers 41 verbunden ist und aus diesem Grund das für die Schwingungen des Meßrohrs 13, 13' charakteristische Signal zugeführt erhält. Dem Steuereingang des Phasenschiebers 49 ist das integrierte Ausgangssignal eines Phasenvergleichers 43 zugeführt, nämlich das vom Integrator 44 integrierte Ausgangssignal des D-Flipflops 43'.

Zwischen dem Ausgang des Phasenschiebers 49 und dem jeweiligen Eingang der Leistungsstufen 45, 47 liegen antiparallel zueinander angeordnete Dioden 57, 58. Der Leistungsstufe 45 werden somit nur postive Halbwellen und der Leistungsstufe 47 nur negative Halbwellen des Ausgangssignals des Phasenschiebers 49 zugeführt.

Die Treiberschaltung der Fig. 5 ist zusammen mit dem Blindrohr selbsterregend, d.h. die bei Fig. 4 erforderliche Phasenregelschleife zur Erzeugung des Wecheslstroms i ist bei Fig. 5 nicht erforderlich. Das stellt u.a. auch einen Kostenvorteil dar.

Eine weitere Schaltung zur Ansteuerung der Spulen 34, 37 ist als Blockschaltbild in Fig. 6 dargestellt; sie ist eine Abwandlung der Treiberschaltung von Fig. 5. Die in Fig. 6. mit Fig. 5 übereinstimmenden Teile haben dieselben Bezugszeichen und werden wieder nicht nochmals erläutert.

Auch bei Fig. 6 werden anstatt des mit dem Wechselstrom i überlagerten Gleichstroms I nach Fig. 4 positive und negative Halbwellen eines Treibersignals T' ausgenutzt. Dieses wird jedoch nicht von einem Phasenschieber wie bei Fig. 5, sondern von einem spannungsgesteuerten Oszillator 50 geliefert, dessen Steuereingang das integrierte Ausgangssignal eines Phasenvergleichers 43 zugeführt ist, nämlich das vom Integrator 44 integrierte Ausgangssignal des D-Flipflops 43'.

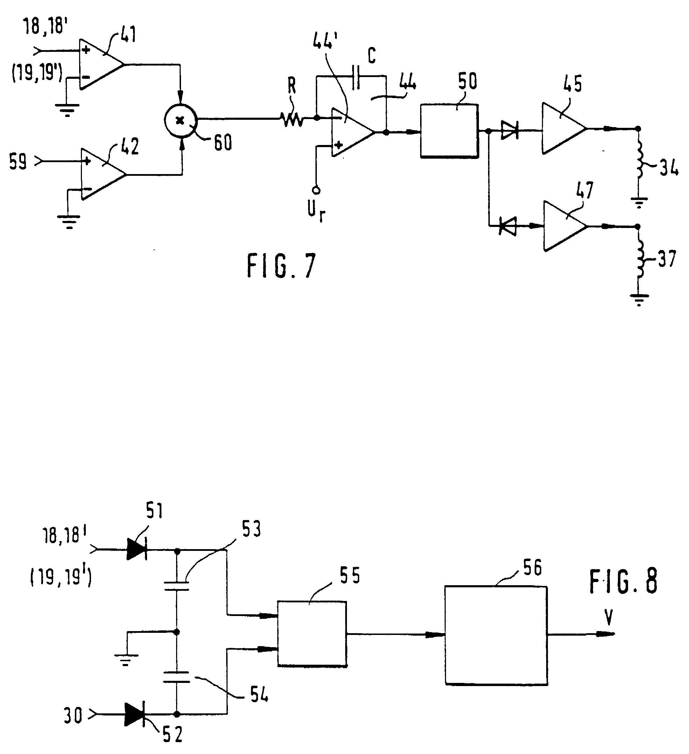

Schließlich zeigt auch Fig. 7 als Blockschaltbild eine Schaltung zur Ansteuerung der Spulen 34, 37. Die Fig. 7 ist eine Weiterbildung der Treiberschaltungen von Fig. 5 und 6. Die in Fig. 7. mit Fig. 6 übereinstimmenden Teile haben dieselben Bezugszeichen und werden wieder nicht nochmals erläutert.

In Fig. 7 ist der einstellbare Phasenschieber 48 nach den Fig. 4, 5 und 6 durch einen Sensor 59 für die Beschleunigung des Trägerrohrs 17 und der Phasenvergleicher 43 mit dem D-Flipflop 43' durch einen Multiplizierer 60 ersetzt. Somit entfällt die manuelle Einstellung des Schwingungsminimums am Trägerrohr, und dieses Minimum stellt sich automatisch ein. Dieser Ersatz kann auch bei der Schaltung von Fig. 4 vorgenommen werden.

Bei den Ausgestaltungen der Erfindung nach den Fig. 5 bis 7 kann anstatt des elektromagnetischen Systems 30 auch ein elektrodynamisches System verwendet werden, das bekanntlich aus einem Dauermagneten und einer Tauchspule besteht.

Mit der Anordnung nach der Erfindung kann auch in einfacher Weise die Viskosität des Fluids bestimmt werden. Hierzu dient die Schaltung nach Fig. 8. Das Signal eines der Sensoren 18, 18' bzw. 19, 19' und ein aus der Treiberschaltung stammendes, für die Schwingungsamplitude des Blindrohrs 14, 14' charakteristisches Signal, z.B. das bereits erwähnte, aus dem elektromagnetischen System 30 stammende Signal, werden spitzenwert-gleichgerichtet, wozu jeweils eine Diode 51, 52 mit zugehörigem Kondensator 53, 54 dient. Das Ausgangssignal der Diode 51 wird mittels eines anlogen Dividierers 55 durch das Ausgangssignal der Diode 52 dividiert. Das Ausgangssignal des Dividierers 55 wird mittels eines Mikrokontrollers 56 in das Viskositätssignal V umgewandelt. Dies kann z. B. durch eine darin enthaltene Look-up-Tabelle geschehen, die eine vorher abgespeicherte Zuordnung zwischen den Ausgangssignal-Werten des Dividierers 55 und der Viskosität V enthält.

## Patentansprüche

1. Massedurchflußaufnehmer (10) nach dem Coriolis-Prinzip,

   - der in den Verlauf einer von einem zu messenden Fluid durchströmten Rohrleitung eines gegebenen Durchmessers axial mit ihr fluchtend über Flansche (11, 12) einsetzbar ist,
   - mit einem geraden, vom Fluid durchflossenen, zwischen den Flanschen verlaufenden Meßrohr (13, 13'),
   - mit einem zum Meßrohr parallelen, geraden, nichtdurchflossenen Blindrohr oder Stab (14, 14'),
   - mit einer einlaßseitigen und einer auslaßseitigen Knotenplatte (15, 15'; 16, 16'),

     -- deren eine den einlaßseitigen Endteil des Meßrohrs am entsprechenden Endteil des Blindrohrs bzw. Stabs und
     -- deren andere den auslaßseitigen Endteil des Meßrohrs am entsprechenden Endteil des Blindrohrs bzw. Stabs jeweils nebeneinander fixiert,

   - mit einem Trägerrohr (17, 17'), dessen jeweiliges Ende am jeweiligen Flansch fixiert ist, und
   - mit Mitteln, die nur am Blindrohr bzw. Stab zur Erregung von Resonanz-Schwingungen des Meßrohrs angreifen.

2. Massedurchflußaufnehmer nach Anspruch 1 mit einem das Meßrohr (13') koaxial umgebenden Blindrohr (14').

3. Massedurchflußaufnehmer nach Anspruch 1 oder 2 mit einem in die jeweilige Knotenplatte einseitig eingesetzten und dadurch verschlossenen, vorzugsweise evakuierten, Blindrohr.

4. Massedurchflußaufnehmer nach Anspruch 1, bei dem die Resonanzfrequenz des Blindrohrs (14, 14') in Abhängigkeit von der Phasenlage seiner Schwingung zu der des Meßrohrs (13, 13') auf möglichst 180° geregelt ist.

5. Massedurchflußaufnehmer nach Anspruch 1 oder 4, bei dem die Mittel zur Erregung von Resonanz-Schwingungen ein elektromagnetisches System (30) und eine Treiberschaltung umfassen,

   - wobei das elektromagnetische System (30)

     -- eine das Blindrohr umgebende Hülse (31) aus einem weichmagnetischen Material,
     -- einen ersten Elektromagneten (32) mit einem ersten U-förmigen Kern (33) und eine erste Spule (34),
     -- einen zweiten Elektromagneten (35) mit einem zweiten U-förmigen Kern (36) und einer zweiten Spule (37) enthält,

       --- welche Elektromagneten bezüglich der Hülse einander diametral gegenüberliegen,

   - und wobei die Treiberschaltung einen einem Gleichstrom (I) überlagerten Wechselstrom (i) dadurch erzeugt,

     -- daß ein für die Schwingungen des Meßrohrs (13, 13') charakteristisches Signal dem ersten Eingang eines Phasenvergleichers (43) zugeführt ist,
     -- daß ein aus einem für die Schwingungen des Blindrohrs (14, 14') charakteristischen Signal mittels eines einstellbaren Phasenschiebers (48) erzeugtes Signal dem zweiten Eingang des Phasenvergleichers (43) zugeführt ist und
     -- daß das Ausgangssignal des Phasenvergleichers integriert wird,

       --- wobei der einstellbare Phasenschieber (48) solange verstellt wird, bis am Trägerrohr (17) nur noch minimale Vibrationen festzustellen sind, und

     -- welcher Wechselstrom (i) mittels einer Phasenregelschleife auf die Resonanzfrequenz des Meßrohrs (13, 13') eingeregelt ist (Fig. 4).

6. Massedurchflußaufnehmer nach Anspruch 1 oder 4, bei dem die Mittel zur Erregung von Resonanz-Schwingungen ein elektromagnetisches System (30) und eine Treiberschaltung umfassen,

   - wobei das elektromagnetische System (30)

     -- eine das Blindrohr umgebende Hülse (31) aus einem weichmagnetischen Material,
     -- einen ersten Elektromagneten (32) mit einem ersten U-förmigen Kern (33) und eine erste Spule (34),
     -- einen zweiten Elektromagneten (35) mit einem zweiten U-förmigen Kern (36) und einer zweiten Spule (37) enthält,

--- welche Elektromagneten bezüglich der Hülse einander diametral gegenüberliegen, und

- wobei die Treiberschaltung positive Halbwellen eines Treibersignals (T) dem ersten Elektromagneten und negative Halbwellen dieses Signals dem zweiten Elektromagneten zuführt,

-- welches Treibersignal das Ausgangssignal eines Phasenschiebers (49) ist,

--- dessen Signaleingang ein für die Schwingungen des Meßrohrs (13, 13') charakteristisches Signal und

--- dessen Steuereingang das integrierte Ausgangssignal eines Phasenvergleichers (43) zugeführt ist,

---- dessen einem Eingang das für die Schwingungen des Meßrohrs (13, 13') charakteristische Signal und

---- dessen anderem Eingang ein für die Schwingungen des Blindrohrs (14, 14') charakteristisches Signal über einen einstellbaren Phasenschieber (48) zugeführt ist,

--- wobei dieser Phasenschieber solange verstellt wird, bis am Trägerrohr nur noch minimale Vibrationen festzustellen sind (Fig. 5).

7. Massedurchflußaufnehmer nach Anspruch 1 oder 4, bei dem die Mittel zur Erregung von Resonanz-Schwingungen ein elektromagnetisches System (30) und eine Treiberschaltung umfassen,

- wobei das elektromagnetische System (30)

-- eine das Blindrohr umgebende Hülse (31) aus einem weichmagnetischen Material,

-- einen ersten Elektromagneten (32) mit einem ersten U-förmigen Kern (33) und eine erste Spule (34),

-- einen zweiten Elektromagneten (35) mit einem zweiten U-förmigen Kern (36) und einer zweiten Spule (37) enthält,

--- welche Elektromagneten bezüglich der Hülse einander diametral gegenüberliegen, und

- wobei die Treiberschaltung positive Halbwellen eines Treibersignals (T') dem ersten Elektromagneten und negative Halbwellen dieses Signals dem zweiten Elektromagneten zuführt,

-- welches Treibersignal das Ausgangssignal eines spannungsgesteuerten Oszillators (50) ist,

--- dessen Steuereingang das integrierte Ausgangssignal eines Phasenvergleichers (43) ist,

---- dessen einem Eingang ein für die Schwingungen des Meßrohrs (13, 13') charakteristische Signal und

---- dessen anderem Eingang ein für die Schwingungen des Blindrohrs (14, 14') charakteristisches Signal über einen einstellbaren Phasenschieber (48) zugeführt ist,

--- wobei dieser Phasenschieber solange verstellt wird, bis am Trägerrohr nur noch minimale Vibrationen festzustellen sind (Fig. 6).

8. Massedurchflußaufnehmer nach einem der Ansprüche 5 bis 7, bei dem der einstellbare Phasenschieber (48) durch einen Sensor (59) für die Beschleunigung des Trägerrohrs (17) und der Phasenvergleicher (43) durch einen Multiplizierer (60) ersetzt sind (Fig. 7).

9. Massedurchflußaufnehmer nach Anspruch 1, bei dem aus den Schwingungsamplituden von Meßrohr und Blindrohr die Viskosität des Fluids ermittelt wird.

**Claims**

1. A mass flow sensor (10) working on the Coriolis principle

- which can be installed, by means of flanges (11, 12), in a conduit of a given diameter so as to be axially aligned with said conduit, through which flows a fluid to be measured,
- with a straight measuring tube (13, 13') extending between the flanges and traversed by the fluid,
- with a straight dummy tube or rod (14, 14') extending parallel to the measuring tube and not traversed by the fluid,
- with a nodal plate (15, 15') on the inlet side and a nodal plate (16, 16') on the outlet side,

-- one of which fixes the inlet-side end portion of the measuring tube or rod to the corresponding end portion of the dummy tube, and

-- the other of which fixes the outlet-side end portion of the measuring tube to the corresponding end portion of the dummy tube or rod, so that the measuring tube and the dummy tube or rod are arranged side by side,

- with a support tube (17, 17') having its ends fixed in the respective flanges, and
- with means which act only on the dummy tube or rod to excite resonance vibrations of the measuring tube.

2. A mass flow sensor as claimed in claim 1, comprising a dummy tube (14') surrounding the measuring tube (13') coaxially.

3. A mass flow sensor as claimed in claim 1 or 2, comprising a dummy tube having its ends fitted in the respective nodal plates, the dummy tube thus being closed, preferably evacuated.

4. A mass flow sensor as claimed in claim 1 wherein the resonance frequency of the dummy tube (14, 14') is regulated so that the phase relationship between the vibration of the dummy tube and that of the measuring tube (13, 13') is 180° or as close as possible to this value.

5. A mass flow sensor as claimed in claim 1 or 4 wherein the means for exciting resonance vibrations comprise an electromagnetic system (30) and a driver circuit,

- with the electromagnetic system containing

-- a sleeve (31) of soft magnetic material surrounding the dummy tube,
-- a first electromagnet (32) with a first U-shaped core (33) and a first coil (34), and
-- a second electromagnet (35) with a second U-shaped core and (36) a second coil (37),

--- the electromagnets being located diametrically opposite to each other with respect to the sleeve, and

- with the driver circuit generating an alternating current (i) superposed on a direct current (I)

-- by applying a signal represenative of the vibrations of the measuring tube (13, 13') to the first input of a phase comparator (43),
-- by applying a signal generated from a signal representative of the vibrations of the dummy tube (14, 14') by means of an adjustable phase shifter (48) to the second input of the phase comparator (43), and

-- by integrating the output of the phase comparator,

--- with the adjustable phase shifter (48) being adjusted until only minimum vibrations are detectable at the support tube (17), and

-- the alternating current (i) being adjusted to the resonance frequency of the measuring tube (13, 13') by means of a phase-locked loop (Fig. 4).

6. A mass flow sensor as claimed in claim 1 or 4 wherein the means for exciting resonance vibrations comprise an electromagnetic system (30) and a driver circuit

- with the electromagnetic system (30) containing

-- a sleeve (31) of soft magnetic material surrounding the dummy tube,
-- a first electromagnet (32) with a first U-shaped core (33) and a first coil (34), and
-- a second electromagnet (35) with a second U-shaped core (36) and a second coil (37),

--- the electromagnets being located diametrically opposite to each other with respect to the sleeve and

- with the driver circuit applying positive half waves of a driver signal (T) to the first electromagnet, and negative half waves of said signal to the second electromagnet,

-- the driver signal being the output signal of a phase shifter (49),

--- whose signal input is supplied with a signal representative of the vibrations of the measuring tube (13, 13'), and
--- whose control input is supplied with the integrated output signal of a phase comparator (43),

---- one input of which is supplied with the signal representative of the vibrations of the measuring tube (13, 13'), and
---- the other input of which is supplied with a signal representative of the vibrations of the dummy tube (14, 14') via an adjustable phase shifter (48),

--- the phase shifter being adjusted until only minimum vibrations are detectable at the support tube. (Fig. 5).

7. A mass flow sensor as claimed in claim 1 or 4 wherein he means for exciting resonance vibrations comprise an electromagnetic system and a driver circuit (30)

- with the electromagnetic system (30) containing

-- a sleeve (31) of soft magnetic material surrounding the dummy tube,
-- a first electromagnet (32) with a first U-shaped core (33) and a first coil (34), and
-- a second electromagnet (35) with a second U-shaped core (36) and a second coil (37),

--- the electromagnets being located diametrically opposite to each other with respect to the sleeve, and

- with the driver circuit applying positive half waves of a driver signal (T') to the first electromagnet, and negative half waves of said signal to the second electromagnet,

-- the driver signal being the output signal of a voltage-controlled oscillator (50),

--- whose control input is supplied with the integrated output signal of a phase comparator (43),

---- one input of which is supplied with a signal representative of the vibrations of the measuring tube (13, 13'), and
---- the other input of which is supplied with a signal representative of the vibrations of the dummy tube (14, 14') via an adjustable phase shifter (48),

--- the phase shifter being adjusted until only minimum vibrations are detectable at the support tube (Fig. 6).

8. A mass flow sensor as claimed in any one of claims 5 to 7 wherein the adjustable phase shifter (48) is replaced with a sensor (59) for measuring the acceleration of the support tube (17), and the phase shifter (43) with a multiplier (60) (Fig. 7).

9. A mass flow sensor as claimed in claim 1 wherein the viscosity of the fluid is determined from the vibration amplitudes of measuring tube and dummy tube.

**Revendications**

1. Capteur de débit massique (10), selon le principe de Coriolis,

- qui peut être monté par des brides (11, 12) sur la longueur d'une conduite d'un diamètre donné et traversée par un fluide à mesurer, le capteur étant aligné axialement avec la conduite précitée,
- comprenant un tube de mesure droit (13, 13') s'étendant entre les brides et traversé par le fluide,
- comprenant un tube plein ou une barre (14, 14') non traversé par le fluide, droit et parallèle au tube de mesure,
- comprenant une plaque nodale (15, 15' ; 16, 16') placée côté entrée et une placée côté sortie,

-- l'une des plaques fixant l'extrémité, côté entrée, du tube de mesure sur l'extrémité correspondante du tube plein ou de la barre, et
-- l'autre plaque fixant l'extrémité, côté sortie, du tube de mesure sur l'extrémité correspondante du tube plein ou de la barre, les deux extrémités étant à chaque fois fixées l'une à côté de l'autre,

- comprenant un tube support (17, 17') dont les extrémités respectives sont fixées sur les brides respectives, et
- comprenant des moyens qui n'attaquent qu'au niveau du tube plein ou de la barre pour déclencher des vibrations de résonance du tube de mesure.

2. Capteur de débit massique selon la revendication 1, comprenant un tube plein (14') entourant coaxialement le tube de mesure (13').

3. Capteur de débit massique selon la revendication 1 ou 2, comprenant un tube plein introduit sur un côté de la plaque nodale respective et de ce fait obturé, de préférence évacué.

4. Capteur de débit massique selon la revendication 1, dans lequel la fréquence de résonance du tube plein (14, 14') est réglée au maximum à 180° en fonction de la relation des phases de sa vibration par rapport à celle du tube de mesure (13, 13').

5. Capteur de débit massique selon la revendication 1 ou 4, dans lequel les moyens pour déclencher des vibrations de résonance comprennent un système électromagnétique (30) et un circuit d'excitation,

- où le système électromagnétique (30) comprend

  -- une douille (31) entourant le tube plein et se composant d'un matériau magnétique doux,
  -- un premier électro-aimant (32) comprenant un premier noyau (33) en forme de U et une première bobine (34),
  -- un second électro-aimant (35) comprenant un second noyau (36) en forme de U et une seconde bobine (37),

    --- lesquels électro-aimants sont diamétralement opposés l'un à l'autre par rapport à la douille, et

- où le circuit d'excitation produit un courant alternatif (i) superposé à un courant continu (I), caractérisé

  -- en ce qu'un signal caractéristique pour les vibrations du tube de mesure (13, 13') est acheminé à la première entrée d'un comparateur de phase (43),
  -- en ce qu'un signal produit au moyen d'un déphaseur réglable (48), provenant d'un signal caractéristique pour les vibrations du tube plein (14, 14'), est acheminé à la seconde entrée du comparateur de phase (43), et
  -- en ce que le signal de sortie du comparateur de phase est intégré,

    --- où le déphaseur réglable (48) est déréglé aussi longtemps que l'on constate encore des vibrations même minimes au niveau du tube support (17), et

  -- lequel courant alternatif (i) est réglé sur la fréquence de résonance du tube de mesure (13, 13'), au moyen d'une boucle de réglage de phase (figure 4).

6. Capteur de débit massique selon la revendication 1 ou 4, dans lequel les moyens pour déclencher des vibrations de résonance comprennent un système électromagnétique (30) et un circuit d'excitation,

- où le système électromagnétique (30) comprend

  -- une douille (31) entourant le tube plein et se composant d'un matériau magnétique doux,
  -- un premier électro-aimant (32) comprenant un premier noyau (33) en forme de U et une première bobine (34),

  -- un second électro-aimant (35) comprenant un second noyau (36) en forme de U et une seconde bobine (37),

    --- lesquels électro-aimants sont diamétralement opposés l'un à l'autre par rapport à la douille, et

- où le circuit d'excitation achemine des demi-ondes positives d'un signal d'excitation (T) au premier électro-aimant et des demi-ondes négatives de ce signal au second électro-aimant,

  -- lequel signal d'excitation est le signal de sortie d'un déphaseur (49),

    --- dont l'entrée du signal est un signal caractéristique pour les vibrations du tube de mesure (13, 13'), et
    --- dont l'entrée de commande est le signal de sortie intégré d'un comparateur de phase (43),

      ---- à une entrée duquel est acheminé le signal caractéristique pour les vibrations du tube de mesure (13, 13'), et
      ---- à l'autre entrée duquel est acheminé un signal caractéristique pour les vibrations du tube plein (14, 14'), via un déphaseur réglable (48),

    --- où ce déphaseur est déréglé aussi longtemps que l'on constate encore des vibrations même minimes au niveau du tube support (figure 5).

7. Capteur de débit massique selon la revendication 1 ou 4, dans lequel les moyens pour déclencher des vibrations de résonance comprennent un système électromagnétique (30) et un circuit d'excitation,

- où le système électromagnétique (30) comprend

  -- une douille (31) entourant le tube plein et se composant d'un matériau magnétique doux,
  -- un premier électro-aimant (32) comprenant un premier noyau (33) en forme de U et une première bobine (34),
  -- un second électro-aimant (35) comprenant un second noyau (36) en forme de U et une seconde bobine (37),

    --- lesquels électro-aimants sont diamétralement opposés l'un à l'autre par rapport à la douille, et

- où le circuit d'excitation achemine des demi-ondes positives d'un signal d'excitation (T') au premier électro-aimant et des demi-ondes négatives de ce signal au second électro-aimant,

  -- lequel signal d'excitation est le signal de sortie d'un oscillateur (50) commandé par la tension,

    --- dont l'entrée de commande est le signal de sortie intégré d'un comparateur de phase (43),

      ---- à l'entrée duquel est acheminé un signal caractéristique pour les vibrations du tube de mesure (13, 13'), et
      ---- à l'autre entrée duquel est acheminé un signal caractéristique pour les vibrations du tube plein (14, 14'), via un déphaseur réglable (48),

    --- où ce déphaseur est déréglé aussi longtemps que l'on constate encore des vibrations même minimes au niveau du tube support (figure 6).

8. Capteur de débit massique selon l'une des revendications 5 à 7, dans lequel le déphaseur réglable (48) est remplacé par un capteur (59) pour l'accélération du tube support (17) et où le comparateur de phase (43) est remplacé par un multiplicateur (60) (figure 7).

9. Capteur de débit massique selon la revendication 1, dans lequel la viscosité du fluide est calculée d'après les amplitudes de vibrations du tube de mesure et du tube plein.

FIG.1b

FIG.1a

FIG.2b

FIG.2a

FIG. 3

FIG. 4

FIG. 5

FIG. 6

FIG. 7

FIG. 8